# EUROPÄISCHE PATENTSCHRIFT

(11) **EP 4 352 651 B1**
(45) Veröffentlichungstag und Bekanntmachung des Hinweises auf die Patenterteilung: **18.11.2026**
(21) Anmeldenummer: 22729126.7
(22) Anmeldetag: 12.05.2022
(51) Int. Cl.: G06K 19/06, G06K 7/10, G06K 7/14, G06V 10/22

(54) **PRODUKTIONSANLAGE MIT POSITIONSBESTIMMUNGSEINRICHTUNG UND VERFAHREN ZUR POSITIONSBESTIMMUNG IN EINER PRODUKTIONSANLAGE**
PRODUCTION INSTALLATION WITH A POSITION-DETERMINING DEVICE AND METHOD FOR DETERMINING A POSITION IN A PRODUCTION INSTALLATION
INSTALLATION DE PRODUCTION COMPRENANT UN DISPOSITIF DE DÉTERMINATION DE POSITION ET PROCÉDÉ DE DÉTERMINATION DE POSITION DANS UNE INSTALLATION DE PRODUCTION

(30) Priorität: 10.06.2021 DE 102021205874
(43) Veröffentlichungstag der Anmeldung: 17.04.2024
(73) Patentinhaber: Robert Bosch GmbH, 70442 Stuttgart (DE)
(72) Erfinder: VORDERER, Marian Marcel, 71277 Rutesheim (DE); BETZITZA, Thomas, 75365 Calw (DE); SCHROECK, Sebastian, 71263 Weil der Stadt (DE); KOO, Chee Hung, 70439 Stuttgart (DE); FRANGEN, Joachim, 74081 Heilbronn (DE); LEBERLE, Urs, 70806 Kornwestheim (DE); KAMPERT, David, 73773 Aichwald (DE)
(86) Internationale Anmeldenummer: PCT/EP2022/062911
(87) Internationale Veröffentlichungsnummer: WO 2022/258295

(56) Entgegenhaltungen:
- WO-A1-2018/175281
- DE-A1- 102016 216 196
- DE-A1- 102016 216 221
- DE-A1- 102019 003 903

## Beschreibung

### Stand der Technik

Die Erfindung betrifft eine Produktions-, Fertigungs-, Prüf- und/oder Automatisierungsanlage mit einer Positionsbestimmungseinrichtung und ein Verfahren zur Positionsbestimmung sowie eine Verwendung einer zweidimensionalen Codeanordnung in dem Verfahren.

Die Druckschrift DE 10 2016 216 221 A1 beschreibt eine zweidimensionale Codeanordnung umfassend auf einer Fläche angeordnete Basissymbole.

Die Druckschrift DE 10 216 216 196 A1 offenbart eine Sensoranlage, mit mindestens einer Auswerteeinheit, mit einer optischen Sensoreinheit zur Aufnahme mindestens eines Bildes eines Markierungsbereichs mit optischen Markierungen, wobei die optischen Markierungen Positionsinformationen zu ihren Positionen im Markierungsbereich umfassen, wobei die Auswerteeinheit ausgebildet ist, auf Basis des mindestens einen Bildes die Lage der optischen Sensoreinheit bezüglich des Markierungsbereichs in bis zu sechs Lagefreiheitsgraden zu bestimmen. Ferner wird eine Automatisierungsanlage mit mindestens einem Funktionsmodul und einer Sensoranlage vorgeschlagen.

Die Druckschrift DE 10 2019 003 903 A1 betrifft ein Verfahren zum Ermitteln einer Fahrzeugposition eines Kraftfahrzeugs. Das Verfahren umfasst eine Maßnahme a), gemäß welcher ein an einer Landmarke angeordneter QR-Code erfasst wird. Dieses Erfassen erfolgt mittels einer in dem Kraftfahrzeug vorhandenen Kamera, wobei die Landmarke in einer äußeren Umgebung des Kraftfahrzeugs angeordnet ist, und wobei in dem QR-Code Positionsdaten der Landmarke enthalten sind.

Die Druckschrift WO 2018/175281 A1 offenbart ein Verfahren, Systeme und Geräte zur Kombination von vorgedruckten Informationen mit kodierten Sensorinformationen in einem zweidimensionalen Strichcode. Die Sensorinformationen können umweltbezogener, physikalischer oder biologischer Natur sein und zeichnen eine kumulative Zustandsänderung der umweltbezogenen oder biologischen Bedingung auf, der das gekennzeichnete Produkt ausgesetzt war.

### Offenbarung der Erfindung

Die Erfindung betrifft eine Produktions-, Fertigungs-, Prüf- und/oder Automatisierungsanlage mit einer Positionsbestimmungseinrichtung mit einer zweidimensionalen Codeanordnung mit den Merkmalen des Anspruchs 1. Ferner betrifft die Erfindung ein Verfahren zur Positionsbestimmung in einer Produktions-, Fertigungs-, Prüf- und/oder Automatisierungsanlage und eine Verwendung der zweidimensionalen Codeanordnung in einem Verfahren zur Positionsbestimmung in einer Produktions-, Fertigungs-, Prüf- und/oder Automatisierungsanlage. Bevorzugte und/oder vorteilhafte Ausführungen ergeben sich aus den Unteransprüchen, der Beschreibung und den beigefügten Figuren.

Im Rahmen der Erfindung wird eine zweidimensionale Codeanordnung für die Positionsbestimmungseinrichtung, das Verfahren und die Verwendung vorgeschlagen. Die Codeanordnung ist insbesondere von einem Sensor, im Speziellen einer Sensoreinheit, lesbar und/oder decodierbar. Mittels der Sensoreinheit ist insbesondere die absolute Position oder relative Position, im speziellen auch Lage und/oder Orientierung, einer Maschine, eines Moduls oder eines Teils in bis zu sechs Freiheitsgraden messbar und/oder bestimmbar. Insbesondere ist die Codeanordnung ausgebildet, vom Sensor, insbesondere der Sensoreinheit, durch berührungsloses Ablesen detektiert zu werden, wobei durch die berührungslose Detektion eine mehrdimensionale Positionsbestimmung durchführbar ist. Erfindungsgemäß ist die zweidimensionale Codeanordnung in einer Produktions-, Fertigungs-, Prüf- und/oder Automatisierungsanlage eingesetzt, wo beispielsweise Werkstücke, Funktionsmodule, Geräte oder Arbeitsmittel positioniert werden müssen.

Die zweidimensionale Codeanordnung umfasst mindestens eine Parzelle, vorzugsweise eine Mehrzahl an Parzellen, beispielsweise mindestens zehn und/oder hundert Parzellen. Die Parzellen können insbesondere einen flächigen Bereich gleichmäßig und/oder ungleichmäßig zerteilen, beispielsweise und/oder vorzugsweise als regelmäßige Rasterung. Die Parzellen können eine feste oder unterschiedliche Formen aufweisen, beispielsweise rechteckig, sechseckig oder kreisförmig.

Die Parzelle und/oder die Parzellen umfassen jeweils Basissymbole. Die Basissymbole sind in der Parzelle flächig angeordnet, insbesondere sind die Basissymbole auf einer ebenen Fläche angeordnet, alternativ sind die Basissymbole auf einer gekrümmten oder zergliederten Fläche angeordnet. Vorzugsweise bilden die Basissymbole ein zweidimensionales Raster, vorzugsweise periodisches Raster. Die Basissymbole sind vorzugsweise geometrische Figuren, beispielsweise Kreise, Quadrate, Dreiecke oder Striche. Alternativ und/oder ergänzend umfassen die Basissymbole Buchstaben, Symbole und/oder Zahlen. Besonders bevorzugt präsentieren die Basissymbole Ziffern eines Zahlensystems, beispielsweise eines binären Zahlensystems oder eines extra Dezimalsystems. Im Speziellen umfasst die zweidimensionale Codeanordnung mindestens zwei unterschiedliche Basissymbole, beispielsweise ein Symbol und eine Lehrstelle als weiteres Symbol, beispielsweise Kreis und kein Kreis oder unterschiedlich große gleichartige Basissymbole beispielsweise großer und kleiner Kreis.

Die Fläche zur Anordnung der Basissymbole ist beispielsweise ein Boden, insbesondere einer Produktions-, Fertigungs-, Prüf- und/oder Automatisierungsanlage. Alternativ und/oder ergänzend sind die Basissymbole auf der Oberfläche eines Werkstücks, eines Moduls, eines Arbeitsmittels oder Prüfmittels angeordnet.

Durch die in der Parzelle und/oder in den Parzellen angeordneten Basissymbole werden jeweils, insbesondere in jeder Parzelle, erste und zweite Codedaten codiert. Eine Parzelle enthält und/oder umfasst somit als Informationen erste Codedaten und zweite Codedaten, die durch die Basissymbole in der Parzelle codiert und/oder gespeichert sind. Die Codedaten umfassen und/oder beschreiben vorzugsweise jeweils Informationen, Daten und/oder Parameter. Die ersten Codedaten umfassen, codieren und/oder beschreiben eine Positionsinformation. Insbesondere ist die Positionsinformation eine Information der Position, Lage und/oder Orientierung der Parzelle innerhalb der zweidimensionalen Codeanordnung und/oder in einem Markierungsbereich auf einem Objekt, beispielsweise einem Boden, Werkstück oder Modul. Die Positionsinformation ist beispielsweise als Information der Position im zweidimensionalen Raum, beispielsweise Koordinate ausgebildet. Alternativ ist die Positionsinformation als eine dreidimensionale Positionsinformation ausgebildet. Die zweiten Codedaten beschreiben insbesondere Daten und/oder Informationen, die nicht die Positionsinformation darstellen und/oder beschreiben, beispielsweise weitere positionsunabhängige oder positionsabhängige Informationen.

Der Erfindung liegt die Überlegung zugrunde, eine zweidimensionale Codeanordnung bereitzustellen, die neben der Verwendung zur Lokalisation, Position und/oder Orientierungsbestimmung und/oder Einstellung erweiterte Funktionalität aufweist, insbesondere einen breiteren Einsatzbereich ermöglicht. Beispielsweise können so zusätzliche Informationen, insbesondere individuell für Benutzer, Anlage und/oder Aufgabe in der Codeanordnung zur eigentlichen Lokalisierung codiert werden und während des Betriebs der Anlage und/oder Sensoreinheit decodiert werden.

Besonders bevorzugt ist es, dass die zweiten Codedaten eine Anwendungsinformation umfassen. Die Anwendungsinformation ist beispielsweise eine Information über die Anlage, den Anlagenbereich und/oder das Gerät in dem die Codeanordnung angewendet wird und/oder angeordnet ist. Insbesondere können die Anwendungsinformationen eine Prozessbeschreibung und/oder Fertigungsverfahrensbeschreibung umfassen und/oder bilden. Insbesondere umfassen und/oder beschreiben die zweiten Codedaten Identifikationsinformationen, wobei die Identifikationsinformation beispielsweise eine eindeutige Identifikation des jeweiligen Codes und/oder Parzelle erlaubt.

Beispielsweise ist die Identifikationsinformation eine Identifikation des Gerätes, der Anlage, des Bereichs und/oder Verwendungszweck der Codeanordnung des Geräts oder Anlage. Die zweiten Codedaten umfassen und/oder beschreiben optional Geräteinformationen und/oder eine Geräteinformation, beispielsweise um welche Geräteart es sich handelt und/oder welche Daten oder Parameter zur Inbetriebnahme und/oder dem Betreiben des Geräts erforderlich sind. Alternativ und/oder ergänzend beschreiben und/oder umfassen die zweiten Codes Datenfunktionsinformationen, beispielsweise welche Funktion das mit der Codeanordnung versehene Gerät und/oder Modul bereitstellen kann und/oder übernehmen kann.

Besonders bevorzugt ist es, dass die zweiten Codedaten eine Codeanordnungsinformation umfassen, beispielsweise wo, auf welchem Objekt und/oder an welcher Stelle die zweidimensionale Codeanordnung und/oder die jeweilige Parzelle angeordnet ist. Insbesondere umfassen und/oder beschreiben die zweiten Codedaten eine Größeninformation, beispielsweise Längen- und Breiteninformation der Parzelle, der Basissymbole und/oder der Codeanordnung. Alternativ und/oder ergänzend umfassen und/oder beschreiben die zweiten Codedaten Kartierungsinformationen, beispielsweise wie viel Länge, im speziellen Millimeter pro Inkrement, vorliegen und/oder beschreiben und/oder definieren eine Achsenorientierung basierend auf der Parzelle und/oder den Basissymbolen. Alternativ oder ergänzend umfassen und/oder beschreiben die zweiten Codedaten Korrekturfaktoren und/oder einen Korrekturfaktor zur Auswertung, Dekodierung und/oder Verwendung der Codeanordnung als Maßstab.

Eine Ausgestaltung der Erfindung sieht vor, dass die zweiten Codedaten eine Sicherheitsinformation beschreiben und/oder umfassen. Die Sicherheitsinformation umfasst und/oder beschreibt beispielsweise welche Gefahren von dem mit dem der Codeanordnung versehenen Objekt ausgehen, beispielsweise ein Gefahrenbereich. Insbesondere können die Sicherheitsinformationen beschreiben mit welchen weiteren Objekten, dass mit der Codeanordnung versehene Objekt kombinierbar und/oder interagiert ist und/oder welche Objekte nicht in der Umgebung an Orten da sind. Besonders bevorzugt umfassen und/oder beschreiben die zweiten Codedaten Datenbanksinformationen, beispielsweise eine Adressinformation und/oder Linkinformation, die von einer Datenbank oder einer Cloudinformation abrufbar sind. Beispielsweise erlaubt die Datenbankinformation das Aufrufen einer zentralen Datenbank, bei der weit mehr Informationen und/oder Details hinterlegt sind als in dem eigentlichen Code bzw. der zweidimensionalen Codeanordnung codiert werden. In einer Ausgestaltung der Erfindung ist es vorgesehen, dass die zweiten Codedaten Echtheitsinformationen und/oder Schlüsselinformationen umfassen und/oder beschreiben. Die Echtheitsinformationen erlauben beispielsweise eine Verifikation und/oder Überprüfung, ob die vorliegende Codeanordnung und/oder Parzelle tatsächlich echt ist und/oder gefälscht ist. Vorzugsweise umfassen und/oder beschreiben die zweiten Codedaten einen Freigabestatus, beispielsweise um die Verwendung der Codeanordnung und/oder einen Systembetrieb zu erlauben. Besonders bevorzugt ist es, dass die zweiten Codedaten ein Modell, beispielsweise 3D-Modell des mit der Codeanordnung versehenen Objekts, einer Anlage und/oder eines Bereichs umfassen und/oder beschreiben. Insbesondere umfassen und/oder beschreiben die zweiten Codedaten eine Linkinformation zu einer Datenbank, wobei in der Datenbank vorzugsweise das Modell hinterlegt und/oder abrufbar ist.

Insbesondere ist es vorgesehen, dass die zweidimensionale Codeanordnung eine Mehrzahl an Parzellen aufweist. Vorzugsweise sind die Parzellen regelmäßig, beispielsweise als Raster angeordnet. Vorzugsweise beschreiben und/oder umfassen die ersten Codedaten eine Position, Lage und/oder Orientierung der jeweiligen Parzelle in der Codeanordnung, beispielsweise Angabe als Matrixelement oder einer Koordinate, insbesondere X, Y. Diese Ausgestaltung erlaubt einen größeren Bereich, beispielsweise Boden oder eine Fläche mit einer Vielzahl an Parzellen zu versehen und innerhalb dieser Fläche Positionen, Lage und/oder Orientierung zu bestimmen und gleichzeitig zusätzliche Informationen, die zweiten Codedaten zu implementieren.

Insbesondere ist es vorgesehen, dass die Parzelle mindestens einen ersten und einen zweiten Parzellenbereich aufweist. Erster und zweiter Parzellenbereich können jeweils zusammenhängend und/oder unzusammenhängend ausgebildet sein. Insbesondere sind erster und zweiter Parzellenbereich überlappungsfrei ausgebildet. Im ersten Parzellenbereich codieren und/oder beschreiben die angeordneten Basissymbole die ersten Codedaten, wobei die im zweite Parzellen angeordneten Basissymbole zur Kodierung der zweiten Codedaten dienen. Die ersten Codedaten sind somit im ersten Parzellenbereich und die zweiten Codedaten im zweiten Parzellenbereich codiert und/oder umfasst. Insbesondere wird in dieser Hinsicht Bezug genommen auf die Anmeldung DE 10 2016 216 221 A1 und DE 10 216 216 196 A1.

Eine Ausgestaltung der Erfindung sieht vor, dass sie zweidimensionale Codeanordnung als Basissymbole erste Basissymbole und zweite Basissymbole umfasst. Insbesondere können die ersten Basissymbole auf einem ersten Basissymbolsatz basieren und die zweiten Basissymbole auf einem zweiten Basissymbolsatz. Vorzugsweise sind die ersten Basissymbole und/oder die zweiten Basissymbole unterschiedlichen Typs, beispielsweise unterschiedlicher Form, Farbgebung, Muster oder Typ. Beispielsweise sind die ersten Basissymbole als Kreise, beispielsweise Kreise unterschiedlicher Größe, Füllung ausgebildet, wobei die zweiten Basissymbole beispielsweise Rechtecke bilden. Alternativ und/oder ergänzend sind die ersten Basissymbole in einer ersten Farbgebung ausgebildet, beispielsweise schwarz-weiß und/oder Graustufen, wobei die zweiten Basissymbole in einer anderen Farbgebung beispielsweise Bunt und/oder Rot-Grün ausgebildet sind. Durch die ersten Basissymbole werden und/oder sind insbesondere die ersten Codedaten codiert, wobei die zweiten Basissymbole zur Kodierung der zweiten Codedaten vorgesehen sind. Beispielsweise sind die ersten Basissymbole im ersten Parzellenbereich angeordnet, wobei die zweiten Basissymbole im zweiten Parzellenbereich angeordnet sind.

Eine Ausgestaltung der Erfindung sieht vor, dass in der Parzelle Basissymbole zu Kodierung der ersten und zweiten Codedaten des gleichen Typs und/oder der gleichen Art verwendet werden, wobei zur Unterscheidung die Basissymbole zur Kodierung der ersten Codedaten in einer anderen Orientierung und/oder Größe, im Speziellen Farbgebung, verwendet sind als zur Kodierung der zweiten Codedaten.

Eine Ausgestaltung der Erfindung sieht vor, dass die Codeanordnung insbesondere die angeordneten Basissymbole, einen QR-Code, einen Dot-Code, einen Strich-Code oder Aruco-Code bilden. Im Speziellen kann es vorgesehen sein, dass zur Kodierung der ersten Codedaten und der zweiten Codedaten, insbesondere in den unterschiedlichen Parzellenbereichen unterschiedliche Codearten verwendet werden, beispielsweise, dass die Codeanordnung in einer Parzelle eine Mischung aus QR-Code und Dot-Code und/oder Strich-Code bzw. Aruco-Code bildet.

Besonders bevorzugt ist es, dass die Parzelle und/oder jede Parzelle mindestens ein Parzellensymbol zur Vorgabe und/oder Definition einer Lesereihenfolge und/oder Decodierreihenfolge umfasst. Vorzugsweise ist das Parzellensymbol zentral angeordnet alternativ im Randbereich oder beliebig. Insbesondere ist es dabei vorgesehen, dass der erste Parzellenbereich einen X-Parzellenbereich und einen Y-Parzellenbereich umfasst. Besonders bevorzugt sind Y- und X-Parzellenbereich orthogonal zueinander angeordnet. Der X-Koordinatenwert der Parzelle ist in dem X-Parzellenbereich durch die Basissymbole codiert, wobei ein Y-Koordinatenwert, insbesondere der Parzelle oder der Codeanordnung, im Y-Parzellenbereich codiert ist.

Besonders bevorzugt ist es, dass die auf der Fläche angeordneten Basissymbole ein zweidimensionales Raster bilden. Beispielsweise sind hierzu die Basissymbole äquidistant und/oder gitterartig angeordnet.

Die erfindungsgemäße Anlage umfasst eine Positionsbestimmungseinrichtung, wobei die Positionsbestimmungseinrichtung die zweidimensionale Codeanordnung und eine Sensoreinheit aufweist. Die Sensoreinheit ist ausgebildet und/oder angeordnet mindestens einen Abschnitt der Codeanordnung, insbesondere eine Parzelle als Bild aufzunehmen. Die Positionsbestimmungseinrichtung umfasst ein Auswertemodul, wobei das Auswertemodul ausgebildet ist, die erste und/oder zweite Code Daten basierend auf dem Bild zu dekodieren.

Einen weiteren Gegenstand der Erfindung bildet ein Verfahren zur Positionsbestimmung. Das Verfahren sieht vor, dass auf einer Fläche Basissymbole angeordnet werden, wobei die Basissymbole vorzugsweise regelmäßig und/oder gerastet angeordnet sind. Die angeordneten Basissymbole bilden und/oder sind gruppiert zu mindestens einer Parzelle. Vorzugsweise umfasst die Parzelle eine bekannte Anzahl an Basissymbolplätzen. Die Parzelle ist vorzugsweise regelmäßig und/oder symmetrisch ausgebildet, beispielsweise rechteckig und/oder quadratisch. Innerhalb der Parzelle codieren und/oder beschreiben die angeordneten Basissymbole erste Codedaten und zweite Codedaten, wobei die ersten Codedaten eine Positionsinformation umfassen und/oder beschreiben. Die zweidimensionale Codeanordnung, insbesondere die Parzelle, wird von einer Sensoreinheit aufgenommen und ein Bild bereitgestellt. Basierend auf dem Bild, insbesondere der gezeigten Parzelle, werden die ersten und zweiten Codedaten decodiert, wobei vorzugsweise die Position basierend auf den ersten Codedaten in mindestens zwei, vorzugsweise in sechs Freiheitsgraden ermittelt wird.

Ein weiterer Gegenstand der Erfindung wird durch die Verwendung der zweidimensionalen Codeanordnung in dem Verfahren gebildet.

Weitere Vorteile, Wirkungen und Ausgestaltungen ergeben sich aus den beigefügten Figuren und deren Beschreibung. Dabei zeigen:
Figur 1a und Figur 1b ein Ausführungsbeispiel einer Parzelle einer zweidimensionalen Codeanordnung;
Figur 2 eine Mehrzahl an Parzellen einer zweidimensionalen Codeanordnung;
Figur 3 ein Ausführungsbeispiel einer Positionsbestimmungseinrichtung.

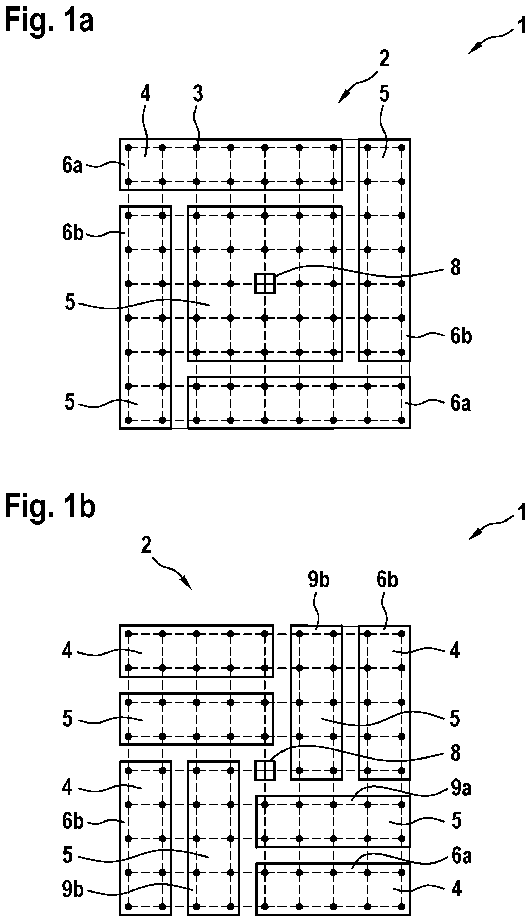

Figur 1a zeigt ein erstes Ausführungsbeispiel einer zweidimensionalen

Codeanordnung. Die zweidimensionale Codeordnung 1 ist auf einer Fläche, insbesondere einer Oberfläche eines Objekts in einer Anlage, eines Bodens oder eines Geräts angeordnet. Die zweidimensionale Codeanordnung 1 umfasst mindestens eine Parzelle. Die Parzelle 2 ist hier als eine rechteckige Fläche ausgebildet, insbesondere quadratisch. Die Parzelle 2 umfasst eine Mehrzahl an Basissymbolen 3, wobei die Basissymbole 3 regelmäßig, gerastet insbesondere matrixartig angeordnet sind. Die Basissymbole 3 sind hier kreisförmig ausgebildet, wobei die Basissymbole 3 beispielsweise auf einem Basissymbolsatz basieren, der als Elemente einen Kreis und einen nicht-Kreis bzw. Kreis mit Radius 0 aufweist, wobei diese stellvertretend für ein binäres Zahlensystem stehen. Alternativ können die Basissymbole 3 unterschiedliche Elemente eines Basissymbolsatzes umfassen, beispielsweise Kreise unterschiedlicher Größe oder unterschiedlicher Farbe. Die Basissymbole 3 bilden die Basis eines Codes und/oder Zahlensystems.

Die 2D-Codeanordnung umfasst einen ersten Parzellenbereich 4 und einen zweiten Parzellenbereich 5. Der Parzellenbereich 4 umfasst seinerseits zwei X-Parzellenbereiche 6a und zwei Y-Parzellenbereiche 6b. Der erste Parzellenbereich 4 ist zur Kodierung und Beschreibung einer Positionsinformation ausgebildet, wobei in den X-Parzellenbereichen 6a eine Exposition und/oder X-Koordinate und in den Y-Parzellenbereichen 6b eine Y-Position bzw. Y-Koordinate codiert ist. Beispielsweise beschreibt die Positionsinformation eine zweidimensionale Koordinate der Parzelle 2 in der 2D-Codeanordnung oder in einem absoluten oder relativen Bezugssystem.

Der zweite Parzellenbereich 5 ist zur Kodierung und Beschreibung zweiter Codedaten ausgebildet. Die zweiten Codedaten werden wiederum durch die Basissymbole 3 im zweiten Parzellenbereich 5 codiert. Die zweiten Codedaten beschreiben beispielsweise eine Maßstabsinformation, eine Kalibrierungsinformation, einen Korrekturfaktor, Objektinformationen und/oder anderweitige Daten.

Die 2D-Codeanordnung, insbesondere die Parzelle 2 umfasst ein Parzellensymbol 8, wobei das Parzellensymbol 8 hier mittig und/oder zentral in der Parzelle 2 angeordnet ist. Das Parzellensymbol 8 ist hier beispielsweise als ein Quadrat ausgebildet. Das Parzellensymbol 8 ist ausgebildet eine lese und/oder codierte Richtung innerhalb der Parzelle 2 zu definieren und/oder vorzugeben. Durch die zweidimensionale Codeanordnung 1 kann eine Lage, Position und/oder Orientierung in bis zu sechs Freiheitsgraden basierend auf einer Bildaufnahme der Parzelle 2 erfolgen, wobei dies insbesondere auf den ersten Codedaten bzw. der Positionsinformation passiert, weitere Anwendungsdaten oder nötige Daten sind in den zweiten Codedaten hinterlegt und/oder codiert.

Figur 1b zeigt ein weiteres Ausführungsbeispiel einer zweidimensionalen Codeanordnung 1, wobei die zweidimensionale Codeanordnung 1 auch hier eine Parzelle 2 mit einer Mehrzahl an Parzellenbereichen umfasst. Die Parzelle 2 umfasst erste Parzellenbereiche 4 und zweite Parzellenbereiche 5. Die Parzellenbereiche 4 und 5 sind hier als rechteckige Teilflächen der Parzelle 2 ausgebildet. Die ersten Parzellenbereiche 4 untergliedern sich in X-Parzellenbereichen 6a und Y-Parzellenbereiche 6b. Der zweite Parzellenbereich 5 umfasst seinerseits eine Mehrzahl an zweiten Parzellenbereichsabschnitten 9a und 9b. In den Bereichen 9a und 9b sind die zweiten Codedaten hinterlegt und/oder codiert, wobei in den ersten Parzellenbereichen 4 die ersten Codedaten als Positionsinformation kodiert sind. Zentral ist wiederum das Parzellensymbol 8 angeordnet zur Definition und/oder Festlegung einer Leserichtung. Im Unterschied zum Ausführungsbeispiel aus Figur 1A ist die Parzelle 2 im Wesentlichen anders in die Parzellenbereiche 4 und 5 aufgeteilt.

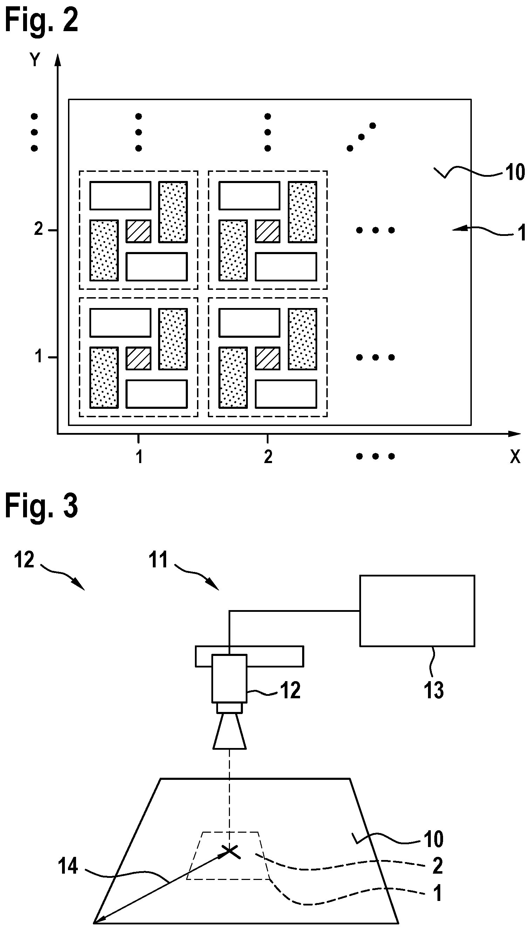

Figur 2 zeigt ein Ausführungsbeispiel einer zweidimensionalen Codeanordnung 1, beispielsweise mit den Parzellen aus Figur 1a und b. Die Codeanordnung 1 ist auf einer Oberfläche 10 angeordnet, beispielsweise einem Boden einer Fertigungsanlage, wobei auf dem Boden Funktionsmodule, beispielsweise Geräte und/oder Anlagen zu positionieren sind, wobei basierend auf den Parzellen 2 bzw. der zweidimensionalen Codeanordnung 1 die Positionsbestimmung und/oder Positionierung erfolgt. Hierzu umfassen die Geräte, Anlagen und/oder Module beispielsweise eine Sensoreinheit 11.

Die Parzellen 2 sind hier quadratisch ausgebildet, wobei eine Mehrzahl an Parzellen 1 auf der Oberfläche 10 angeordnet sind, wobei die Parzellen 1 regelmäßig und/oder gerastet auf der Oberfläche 10 angeordnet sind. Jede Parzelle 1 ist hierbei ausgebildet in den ersten Codedaten die jeweilige Positionsinformation der Parzelle zu beschreiben und/oder codiert zu umfassen, wobei zweite Codedaten für die Parzellen 1 gleichartig oder unterschiedlich ausgebildet sein können.

Figur 3 zeigt ein Ausführungsbeispiel einer Positionsbestimmungseinrichtung 12, wobei die Positionsbestimmungseinrichtung 12 die Codeanordnung 1 aus Figur 1 oder 2 umfasst. Die zweidimensionale Codeanordnung 1 ist auf einer Oberfläche 10, beispielsweise dem Boden einer Anlage angeordnet. Die Codeanordnung 1, bzw. die Parzelle 2 beschreibt in den ersten Codedaten eine Positionsinformation.

Die Positionsbestimmungseinrichtung 12 umfasst eine Sensoreinheit. Die Sensoreinheit 11 ist ausgebildet ein Bild der Codeanordnung 1, insbesondere der Parzelle 2 oder mehrerer Parzellen 2 aufzunehmen, hierzu umfasst diese beispielsweise eine Kamera 2, wobei die Kamera 2 mit einer Blickrichtung zum Boden bzw. der Oberfläche 10 zur Aufnahme der Parzelle angeordnet ist. Das aufgenommene Bild wird einem Auswertemodul 13 bereitgestellt, wobei das Auswertemodul 13 ausgebildet ist, basierend auf dem aufgenommenen Bild die zweidimensionale Codeanordnung 1, im Speziellen der Parzelle, zu decodieren, im Speziellen um die X und Y zu bestimmen. Ferner ist das Auswertemodul ausgebildet, basierend auf dem aufgenommen Bild, insbesondere der gezeigten zweidimensionalen Codeanordnung 1 insbesondere der Parzelle 2, die Position, Lage und/oder Orientierung der Codeanordnung 1 und/oder der Oberfläche 10 bzw. dem dazugehörigen Objekt zu bestimmen, insbesondere in sechs Freiheitsgraden. Ferner ist das Auswertemodul 13 ausgebildet, basierend auf dem aufgenommenen Bild die zweiten Codedaten zu dekodieren, beispielsweise ist hierin ein Offset und/oder an kalibrierter Parameter 14 beschrieben.

## Patentansprüche

1. Produktions-, Fertigungs-, Prüf- und/oder Automatisierungsanlage, in der Werkstücke, Funktionsmodule, Geräte oder Arbeitsmittel positioniert werden müssen,
mit einer Positionsbestimmungseinrichtung (12) umfassend eine zweidimensionale Codeanordnung (1), wobei die zweidimensionale Codeanordnung (1) in der Produktions-, Fertigungs-, Prüf- und/oder Automatisierungsanlage eingesetzt ist,
mit mindestens einer Parzelle (2), wobei die Parzelle (2) Basissymbole (3) umfasst, wobei die Basissymbole (3) der Parzelle (2) auf einer Fläche angeordnet sind, wobei durch die in der Parzelle (2) angeordneten Basissymbole (3) erste Codedaten und zweite Codedaten codiert sind, wobei die auf der Fläche angeordneten Basissymbole (3) ein zweidimensionales periodisches Raster bilden;
umfassend eine Sensoreinheit (11) zur Aufnahme eines Bildes, wobei das Bild einen Ausschnitt der Codeanordnung (1) umfasst;
und ein Auswertemodul (13) zur Decodierung der ersten und zweiten Codedaten;
wobei die ersten Codedaten eine Positionsinformation umfassen und/oder beschreiben;
wobei die zweiten Codedaten eine Anwendungsinformation, Identifikationsinformation, Geräteinformation und/oder Funktionsinformation umfassen und/oder beschreiben,
und/oder
die zweiten Codedaten eine Codeanordnungsinformation, insbesondere Größeninformation, Skalierungsinformation, Kalibrierungsinformation und/oder Maßstabsinformation umfassen und/oder beschreiben und/oder
die zweiten Codedaten einen Freigabestatus, eine Sicherheitsinformation, Datenbankinformation, Adressinformation, Linkinformation, Echtheitsinformation und/oder Schlüsselinformation umfassen und/oder beschreiben.

2. Produktions-, Fertigungs-, Prüf- und/oder Automatisierungsanlage nach Anspruch 1, **gekennzeichnet durch** eine Mehrzahl an Parzellen (2), wobei die ersten Codedaten eine Position, Lage und/oder Orientierung der Parzelle (2) in der Codeanordnung (1) umfassen und/oder beschreiben.

3. Produktions-, Fertigungs-, Prüf- und/oder Automatisierungsanlage nach Anspruch 1 oder 2, **dadurch gekennzeichnet, dass** die Parzelle (2) einen ersten Parzellenbereich (4) und einen zweiten Parzellenbereich (5) aufweist, wobei im ersten Parzellenbereich (4) die Basissymbole (3) zur Codierung der ersten Codedaten angeordnet sind, wobei im zweiten Parzellenbereich (5) die Basissymbole (3) zur Codierung der zweiten Codedaten angeordnet sind.

4. Produktions-, Fertigungs-, Prüf- und/oder Automatisierungsanlage nach einem der vorherigen Ansprüche, **dadurch gekennzeichnet, dass** die Basissymbole (3) erste Basissymbole (3) eines ersten Basissymbolsatzes und zweite Basissymbole (3) eines zweiten Basissymbolsatzes umfassen, wobei durch die ersten Basissymbole (3) die ersten Codedaten codiert sind, wobei durch die zweiten Basissymbole (3) die zweiten Codedaten codiert sind.

5. Produktions-, Fertigungs-, Prüf- und/oder Automatisierungsanlage nach einem der vorhergehenden Ansprüche, **dadurch gekennzeichnet, dass** in der Parzelle (2) die Basissymbole (3) zur Codierung der ersten Codedaten in einer anderen Orientierung angeordnet sind, als die Basissymbole (3) zur Codierung der zweiten Codedaten.

6. Produktions-, Fertigungs-, Prüf- und/oder Automatisierungsanlage nach einem der vorherigen Ansprüche, **dadurch gekennzeichnet, dass** die Codeanordnung (1), insbesondere die angeordneten Basissymbole (3), einen QR-Code, Dot-Code, Strich-Code und/oder Aruco-Code umfasst und/oder bildet.

7. Produktions-, Fertigungs-, Prüf- und/oder Automatisierungsanlage nach einem der vorherigen Ansprüche, **dadurch gekennzeichnet, dass** die Parzelle (2) mindestens ein Parzellensymbol (8) zur Vorgabe einer Lesereihenfolge und/oder Codierreihenfolge der Basissymbole (3) in dem ersten und/oder zweiten Parzellenbereich (4, 5) umfasst, wobei der erste Parzellenbereich (4) einen X-Parzellenbereich (6a) und einen Y-Parzellenbereich (6b) umfasst, wobei ein X-Koordinatenwert in dem X-Parzellenbereich (6a) durch die Basissymbole (3) codiert ist und ein Y-Koordinatenwert in dem Y-Parzellenbereich (6b) durch die Basissymbole (3) codiert ist.

8. Verfahren zur Positionsbestimmung in einer Produktions-, Fertigungs-, Prüf- und/oder Automatisierungsanlage, wobei für eine zweidimensionale Codeanordnung (1) auf einer Fläche Basissymbole (3) angeordnet werden, wobei eine Mehrzahl an Basissymbolen (3) eine Parzelle (2) bilden, wobei die in der Parzelle (2) angeordneten Basissymbole (3) erste und zweite Codedaten codieren, wobei die ersten Codedaten eine Positionsinformation beschreiben und/oder umfassen, wobei ein Bild aufgenommen wird, wobei das Bild mindestens eine Parzelle (2) zeigt, wobei basierend auf der im Bild gezeigten Parzelle (2) die Positionsinformation bestimmt wird,
wobei die zweiten Codedaten eine Anwendungsinformation, Identifikationsinformation, Geräteinformation und/oder Funktionsinformation umfassen und/oder beschreiben,
und/oder
wobei die zweiten Codedaten eine Codeanordnungsinformation, insbesondere Größeninformation, Skalierungsinformation, Kalibrierungsinformation und/oder Maßstabsinformation umfassen und/oder beschreiben
und/oder
wobei die zweiten Codedaten einen Freigabestatus, eine Sicherheitsinformation, Datenbankinformation, Adressinformation, Linkinformation, Echtheitsinformation und/oder Schlüsselinformation umfassen und/oder beschreiben.
wobei die zweiten Codedaten eine Codeanordnungsinformation, insbesondere Größeninformation, Skalierungsinformation, Kalibrierungsinformation und/oder Maßstabsinformation umfassen und/oder beschreiben
und die zweiten Codedaten decodiert werden.

9. Verwendung einer zweidimensionalen Codeanordnung (1) mit mindestens einer Parzelle (2) in einer Produktions-, Fertigungs-, Prüf- und/oder Automatisierungsanlage, wobei die Parzelle (2) Basissymbole (3) umfasst, wobei die Basissymbole (3) der Parzelle (2) auf einer Fläche angeordnet sind, wobei durch die in der Parzelle (2) angeordneten Basissymbole (3) erste Codedaten und zweite Codedaten codiert sind, wobei die ersten Codedaten eine Positionsinformation umfassen und/oder beschreiben, wobei die zweiten Codedaten eine Anwendungsinformation, Identifikationsinformation, Geräteinformation und/oder Funktionsinformation umfassen und/oder beschreiben,
und/oder
wobei die zweiten Codedaten eine Codeanordnungsinformation, insbesondere Größeninformation, Skalierungsinformation, Kalibrierungsinformation und/oder Maßstabsinformation umfassen und/oder beschreiben
und/oder
wobei die zweiten Codedaten einen Freigabestatus, eine Sicherheitsinformation, Datenbankinformation, Adressinformation, Linkinformation, Echtheitsinformation und/oder Schlüsselinformation umfassen und/oder beschreiben,
und zwar in dem Verfahren zur Positionsbestimmung nach Anspruch 8.

## Claims

1. Production, manufacturing, testing and/or automation plant in which workpieces, functional modules, devices or work equipment must be positioned, having a position determination device (12) comprising a two-dimensional code arrangement (1), the two-dimensional code arrangement (1) being employed in the production, manufacturing, testing and/or automation plant, having at least one parcel (2), the parcel (2) comprising basic symbols (3), the basic symbols (3) of the parcel (2) being arranged on a surface, the basic symbols (3) arranged in the parcel (2) encoding first code data and second code data, the basic symbols (3) arranged on the surface forming a two-dimensional periodic grid;
comprising a sensor unit (11) for capturing an image, said image comprising a portion of the code arrangement (1);
and an evaluation module (13) for decoding the first and second code data; the first code data comprising and/or describing position information;
the second code data comprising and/or describing application information, identification information, device information and/or function information, and/or
the second code data comprising and/or describing code arrangement information, in particular size information, scaling information, calibration information and/or scale information,
and/or
the second code data comprising and/or describing an approval status, security information, database information, address information, link information, authenticity information and/or key information.

2. Production, manufacturing, testing and/or automation plant according to Claim 1, **characterized by** a plurality of parcels (2), the first code data comprising and/or describing a position, bearing and/or orientation of the parcel (2) in the code arrangement (1).

3. Production, manufacturing, testing and/or automation plant according to Claim 1 or 2, **characterized in that** the parcel (2) has a first parcel region (4) and a second parcel region (5), the first parcel region (4) containing the basic symbols (3) for encoding the first code data, the second parcel region (5) containing the basic symbols (3) for encoding the second code data.

4. Production, manufacturing, testing and/or automation plant according to one of the preceding claims, **characterized in that** the basic symbols (3) comprise first basic symbols (3) of a first basic symbol set and second basic symbols (3) of a second basic symbol set, the first basic symbols (3) encoding the first code data, the second basic symbols (3) encoding the second code data.

5. Production, manufacturing, testing and/or automation plant according to one of the preceding claims, **characterized in that** the parcel (2) contains the basic symbols (3) for encoding the first code data in a different orientation than the basic symbols (3) for encoding the second code data.

6. Production, manufacturing, testing and/or automation plant according to one of the preceding claims, **characterized in that** the code arrangement (1), in particular the arranged basic symbols (3), comprises and/or forms a QR code, a dot code, a bar code and/or an ArUco code.

7. Production, manufacturing, testing and/or automation plant according to one of the preceding claims, **characterized in that** the parcel (2) comprises at least one parcel symbol (8) for specifying a read sequence and/or encoding sequence of the basic symbols (3) in the first and/or second parcel region (4, 5), the first parcel region (4) comprising an X parcel region (6a) and a Y parcel region (6b), an X coordinate value in the X parcel region (6a) being encoded by the basic symbols (3) and a Y coordinate value in the Y parcel region (6b) being encoded by the basic symbols (3).

8. Method for position determination in a production, manufacturing, testing and/or automation plant, wherein, for a two-dimensional code arrangement (1), basic symbols (3) are arranged on a surface, a plurality of basic symbols (3) forming a parcel (2), the basic symbols (3) arranged in the parcel (2) encoding first and second code data, the first code data describing and/or comprising position information, wherein an image is captured, the image showing at least one parcel (2), wherein the parcel (2) shown in the image is taken as a basis for determining the position information,
the second code data comprising and/or describing application information, identification information, device information and/or function information, and/or
the second code data comprising and/or describing code arrangement information, in particular size information, scaling information, calibration information and/or scale information,
and/or
the second code data comprising and/or describing an approval status, security information, database information, address information, link information, authenticity information and/or key information,
the second code data comprising and/or describing code arrangement information, in particular size information, scaling information, calibration information and/or scale information,
and the second code data are decoded.

9. Use of a two-dimensional code arrangement (1) having at least one parcel (2) in a production, manufacturing, testing and/or automation plant, the parcel (2) comprising basic symbols (3), the basic symbols (3) of the parcel (2) being arranged on a surface, the basic symbols (3) arranged in the parcel (2) encoding first code data and second code data, the first code data comprising and/or describing position information, the second code data comprising and/or describing application information, identification information, device information and/or function information,
and/or
the second code data comprising and/or describing code arrangement information, in particular size information, scaling information, calibration information and/or scale information,
and/or
the second code data comprising and/or describing an approval status, security information, database information, address information, link information, authenticity information and/or key information,
specifically in the method for position determination according to Claim 8.

## Revendications

1. Installation de production, de fabrication, de test et/ou d'automatisation, dans laquelle des pièces à usiner, des modules fonctionnels, des appareils ou des équipements de travail doivent être positionnés,
comportant un dispositif de détermination de position (12) comprenant un agencement de code bidimensionnel (1), l'agencement de code bidimensionnel (1) étant utilisé dans l'installation de production, de fabrication, de test et/ou d'automatisation,
comportant au moins une zone définie (2), la zone définie (2) comprenant des symboles de base (3), les symboles de base (3) de la zone définie (2) étant agencés sur une surface, des premières données de code et des secondes données de code étant codées par les symboles de base (3) agencés dans la zone définie (2), les symboles de base (3) agencés sur la surface formant une grille périodique bidimensionnelle ;
comportant une unité de capteur (11) pour acquérir une image, l'image comprenant une partie de l'agencement de code (1) ;
et un module d'évaluation (13) pour décoder les premières et secondes données de code ;
les premières données de code comprenant et/ou décrivant des informations de position ;
les secondes données de code comprenant et/ou décrivant des informations d'application, des informations d'identification, des informations d'appareil et/ou des informations de fonction,
et/ou
les secondes données de code comprenant et/ou décrivant des informations d'agencement de code, en particulier des informations de taille, des informations de mise à l'échelle, des informations d'étalonnage et/ou des informations d'échelle
et/ou
les secondes données de code comprenant et/ou décrivant un statut d'autorisation, des informations de sécurité, des informations de base de données, des informations d'adresse, des informations de lien, des informations d'authenticité et/ou des informations de clé.

2. Installation de production, de fabrication, de test et/ou d'automatisation selon la revendication 1, **caractérisée par** une pluralité de zones définies (2), les premières données de code comprenant et/ou décrivant une position, un emplacement et/ou une orientation de la zone définie (2) dans l'agencement de code (1).

3. Installation de production, de fabrication, de test et/ou d'automatisation selon la revendication 1 ou 2, **caractérisée en ce que** la zone définie (2) présente un premier domaine de zone définie (4) et un second domaine de zone définie (5), les symboles de base (3) destinés au codage des premières données de code étant agencés dans le premier domaine de zone définie (4), les symboles de base (3) destinés au codage des secondes données de code étant agencés dans le second domaine de zone définie (5).

4. Installation de production, de fabrication, de test et/ou d'automatisation selon l'une des revendications précédentes, **caractérisée en ce que** les symboles de base (3) comprennent des premiers symboles de base (3) d'un premier ensemble de symboles de base et des seconds symboles de base (3) d'un second ensemble de symboles de base, les premières données de code étant codées par les premiers symboles de base (3), les secondes données de code étant codées par les seconds symboles de base (3).

5. Installation de production, de fabrication, de test et/ou d'automatisation selon l'une des revendications précédentes, **caractérisée en ce que**, dans la zone définie (2), les symboles de base (3) destinés au codage des premières données de code sont agencés dans une orientation différente de celle des symboles de base (3) destinés au codage des secondes données de code.

6. Installation de production, de fabrication, de test et/ou d'automatisation selon l'une des revendications précédentes, **caractérisée en ce que** l'agencement de code (1), en particulier les symboles de base (3) agencés, comprend et/ou forme un code QR, un code à points, un code à barres et/ou un code Aruco.

7. Installation de production, de fabrication, de test et/ou d'automatisation selon l'une des revendications précédentes, **caractérisée en ce que** la zone définie (2) comprend au moins un symbole de zone définie (8) pour la spécification d'une séquence de lecture et/ou d'une séquence de codage des symboles de base (3) dans le premier et/ou le second domaine de zone définie (4, 5), le premier domaine de zone définie (4) comprenant un domaine de zone définie X (6a) et un domaine de zone définie Y (6b), une valeur de coordonnée X dans le domaine de zone définie X (6a) étant codée par les symboles de base (3) et une valeur de coordonnée Y dans le domaine de zone définie Y (6b) étant codée par les symboles de base (3).

8. Procédé de détermination de position dans une installation de production, de fabrication, de test et/ou d'automatisation, dans lequel des symboles de base (3) sont agencés sur une surface pour un agencement de code bidimensionnel (1), une pluralité de symboles de base (3) formant une zone définie (2), les symboles de base (3) agencés dans la zone définie (2) codant des premières et secondes données de code, les premières données de code décrivant et/ou comprenant des informations de position, une image étant acquise, l'image représentant au moins une zone définie (2), les informations de position étant déterminées sur la base de la zone définie (2) représentée dans l'image,
les secondes données de code comprenant et/ou décrivant des informations d'application, des informations d'identification, des informations d'appareil et/ou des informations de fonction,
et/ou
les secondes données de code comprenant et/ou décrivant des informations d'agencement de code, en particulier des informations de taille, des informations de mise à l'échelle, des informations d'étalonnage et/ou des informations d'échelle
et/ou
les secondes données de code comprenant et/ou décrivant un statut d'autorisation, des informations de sécurité, des informations de base de données, des informations d'adresse, des informations de lien, des informations d'authenticité et/ou des informations de clé,
les secondes données de code comprenant et/ou décrivant des informations d'agencement de code, en particulier des informations de taille, des informations de mise à l'échelle, des informations d'étalonnage et/ou des informations d'échelle
et les secondes données de code étant décodées.

9. Utilisation d'un agencement de code bidimensionnel (1) comportant au moins une zone définie (2) dans une installation de production, de fabrication, de test et/ou d'automatisation, la zone définie (2) comprenant des symboles de base (3), les symboles de base (3) de la zone définie (2) étant agencés sur une surface, les premières données de code et les secondes données de code étant codées par les symboles de base (3) agencés dans la zone définie (2), les premières données de code comprenant et/ou décrivant des informations de position, les secondes données de code comprenant et/ou décrivant des informations d'application, des informations d'identification, des informations d'appareil et/ou des informations de fonction,
et/ou
les secondes données de code comprenant et/ou décrivant des informations d'agencement de code, en particulier des informations de taille, des informations de mise à l'échelle, des informations d'étalonnage et/ou des informations d'échelle
et/ou
les secondes données de code comprenant et/ou décrivant un état d'autorisation, des informations de sécurité, des informations de base de données, des informations d'adresse, des informations de lien, des informations d'authenticité et/ou des informations de clé,
et cela, dans le procédé de détermination de position selon la revendication 8.
